# EUROPÄISCHE PATENTSCHRIFT

(11) **EP 3 208 060 B1**
(45) Veröffentlichungstag und Bekanntmachung des Hinweises auf die Patenterteilung: **10.11.2021**
(21) Anmeldenummer: 17155444.7
(22) Anmeldetag: 09.02.2017
(51) Int. Cl.: B27M 3/00, B27M 1/02

(54) **VERFAHREN UND VORRICHTUNG ZUM HERSTELLEN VON BRETTSCHICHTHOLZ**
METHOD AND DEVICE FOR MANUFACTURING GLUED LAMINATED TIMBER
PROCÉDÉ ET DISPOSITIF DE FABRICATION DE BOIS LAMELLÉ-COLLÉ

(30) Priorität: 16.02.2016 AT 500972016
(43) Veröffentlichungstag der Anmeldung: 23.08.2017
(73) Patentinhaber: Fill Gesellschaft m.b.H., 4942 Gurten (AT)
(72) Erfinder: METZ, Karl, 4970 Eitzing (AT)
(74) Vertreter: Burger, Hannes

(56) Entgegenhaltungen:
- EP-A1- 0 607 480
- EP-A1- 2 251 168
- EP-A1- 2 977 157
- EP-A2- 1 950 016
- WO-A1-89/00909
- WO-A1-2010/086051
- DE-B3-102006 013 327
- US-A- 1 465 383
- US-A- 3 990 937
- US-A1- 2009 255 605
- Anonymous: "Jack Pine Wood", , 1 June 2018 (2018-06-01), XP055480637, Retrieved from the Internet: URL:http://www.matweb.com/search/DataSheet .aspx?MatGUID=fdbe785c57a24b72b1cd94cae229 f9a4 [retrieved on 2018-06-01]
- T TABARSA ET AL: "Stress-strain response of wood under radial compression. Part 3.", JOURNAL OF THE INSTITUTE OF WOOD SCIENCE, vol. 17, no. 06, 2008, pages 333-342, XP055547013,

## Beschreibung

Die Erfindung betrifft ein Verfahren gemäß dem Oberbegriff des Patentanspruchs 1 zum Herstellen von Brettschichtholz und eine Fertigungsanlage gemäß dem Oberbegriff des Patentanspruchs 10 zum Durchführen dieses Verfahrens.

Aus dem Stand der Technik ist ein Verfahren zum Herstellen von Brettschichtholz bekannt, wobei die einzelnen Bretter vor dem zuführen zu einer Schlichtstation an deren Grundfläche und Deckfläche, sowie an deren Seitenfläche abgehobelt werden, um zu gewährleisten, dass die einzelnen Bretter einer Brettebene die gleiche Dicke aufweisen und somit ein spaltfreies übereinanderstapeln von verschiedenen Brettebenen erreicht werden kann.

Das aus dem Stand der Technik bekannte Verfahren weist einen komplizierten Fertigungsprozess auf, wobei außerdem eine große Menge an Holzabfall produziert wird.

Aus der US 2009/255605 A1, der EP 1 950 016 A2, der WO 2010/086051 A1, der EP 2 977 157 A1, der EP 2 251 168 A1 der DE 10 2006 013327 B3 und der US 3 990 937 A sind verschiedene Verfahren und Vorrichtungen zum Herstellen von Brettschichtholz bekannt. Die US 2009/255605 A1 offenbart ein Verfahren gemäß dem Oberbegriff des Patentanspruchs 1 und die DE 10 2006 013327 B3 offenbart eine Fertigungsanlage gemäß dem Oberbegriff des Patentanspruchs 10.

Aufgabe der vorliegenden Erfindung ist es, das Verfahren zum Herstellen von Brettschichtholz zu verbessern und eine Fertigungsanlage anzugeben, mit welcher das erfindungsgemäße Verfahren zum Herstellen von Brettschichtholz durchgeführt werden kann.

Diese Aufgabe wird durch ein Verfahren und eine Vorrichtung gemäß den Ansprüchen 1 und 10 gelöst.

Das erfindungsgemäße Verfahren zum Herstellen von Brettschichtholz umfasst folgende Verfahrensschritte:
- Bereitstellen von einzelnen Brettern mittels einer Zuführvorrichtung, wobei die Bretter aus Holzstämmen geschnitten sind;
- Auftragen eines Klebstoffes, insbesondere Holzleim, auf die einzelnen Bretter in einer Leimstation;
- Schlichten der einzelnen Bretter zu einem Stapel mit mehreren Brettebenen in einer Schlichtstation, wobei in zumindest einer der Brettebenen zwei einzelne Bretter angeordnet sind, welche an deren Stirnseite aneinander anliegen;
- Verpressen der zu dem Stapel geschlichteten Bretter zu einem Brettschichtholz mittels einer Pressvorrichtung durch aufbringen einer Presskraft, wobei die Grundfläche der Bretter einer Brettebene an die Deckfläche der Bretter einer darunter liegenden Brettebene angedrückt wird, wobei die Presskraft so groß gewählt ist, dass zumindest einzelne in einer Brettebene liegende Bretter plastisch verformt werden um eine weitestgehend spaltenfreie Verbindung der Grundflächen und Deckflächen von einzelnen Brettern zwischen unterschiedlichen Brettebenen zu erreichen.

Von Vorteil am erfindungsgemäßen Verfahren ist, dass Formabweichungen bzw. Dickenabweichungen von einzelnen Brettern durch die hohe Presskraft und das damit einhergehende plastische Verformen der Bretter ausgeglichen werden können. Somit ist es nicht notwendig, dass die Bretter vor dem Schlichten zu einem Stapel dickengehobelt werden, wodurch die anfallende Menge an Holzabfall vermindert werden kann. Darüber hinaus kann durch diese Maßnahme eine Verkürzung der Prozesszeit und somit eine Erhöhung der Effizienz der Fertigungsanlage erreicht werden. Das plastische Verformen der Bretter kann durch einen Bruch der Holzfaser durch lokales Überschreiten der Druckfestigkeit von Holz erreicht werden.

Weiters kann es zweckmäßig sein, wenn die Presskraft pro cm² größer ist als die Druckfestigkeit des zu verarbeitenden Holzes. Von Vorteil ist hierbei, dass durch die lokal über der Druckfestigkeit liegende Presskraft eine Verformung des Holzes erreicht werden kann.

Ferner kann vorgesehen sein, dass die Presskraft auf die Gesamtpressfläche gesehen zwischen 120N/cm² und 10.000N/cm², insbesondere zwischen 150N/cm² und 7.000N/cm², bevorzugt zwischen 190N/cm² und 1.000N/cm² beträgt. Von Vorteil ist hierbei, dass bei diesen Werten der Presskraft bei Holz, insbesondere Fichtenholz, eine lokale Verformung von vorstehenden Bereichen erreicht werden kann. Insbesondere kann es durch die hier angegebene gemittelte Flächenbelastung zu weit höheren lokalen Belastungen am zu verarbeitenden Holz kommen, wobei beispielsweise die Druckfestigkeit von Fichtenholz, welche je nach Belastungsrichtung in etwa 1.500N/cm² bis 4.000N/cm² beträgt, überschritten wird. Derartige lokale Belastungsspitzen können beispielsweise zwischen 1.000N/cm² und 20.000N/cm² betragen.

Darüber hinaus kann vorgesehen sein, dass die einzelnen Bretter vor dem Auftragen von Klebstoff an deren Seitenflächen Breitengehobelt werden, wobei die Deckfläche und die Grundfläche der einzelnen Bretter nicht bearbeitet wird. Dadurch können die Bretter bezüglich deren Breite angepasst werden, wobei der Holzabfall aufgrund des nicht bearbeitens der Deckflächen der Grundfläche möglichst gering gehalten wird.

Vorteilhaft ist auch eine Ausprägung, gemäß welcher vorgesehen sein kann, dass das Brettschichtholz nach dem Verpressen an der Grundfläche und der Deckfläche des Brettschichtholzes dickengehobelt wird und dass die Seitenflächen des Brettschichtholzes breitengehobelt werden. Dadurch kann eine gleichmäßige Außenoberfläche des Brettschichtholzes erreicht werden.

Gemäß einer Weiterbildung ist es möglich, dass die Bretter derart abgelängt oder sortiert werden, sodass die Stöße zwischen den einzelnen sich in einer Brettebene befindlichen Brettern relativ zu Stößen zwischen einzelnen sich in einer anschließenden Brettebene befindlichen Brettern versetzt angeordnet werden. Von Vorteil ist hierbei, dass durch diese Maßnahme die Biegefestigkeit des Brettschichtholzes erhöht werden kann.

Darüber hinaus kann vorgesehen sein, dass an den Brettern von einzelnen zwischenliegenden Brettebenen kein Klebstoff aufgetragen wird, sodass im Stapel mehrere voneinander lösbare Brettschichthölzer hergestellt werden. Durch diese Maßnahme können mehrere Brettschichthölzer gleichzeitig verpresst werden.

Ferner kann es zweckmäßig sein, wenn die einzelnen stirnseitig aneinander liegenden Bretter vor dem Auftragen von Klebstoff keilgezinkt werden. Dadurch kann eine verbesserte Verbindung zwischen den einzelnen Brettern erreicht werden.

Weiters kann vorgesehen sein, dass nach dem Verpressen das Brettschichtholz in Scheiben geschnitten wird, welche zu einer Platte zusammengeleimt werden und als Mittelschicht in einer Dreischichtplatte verbaut werden. Eine derartig hergestellte Mittelschicht in einer Dreischichtplatte weist sehr gute Festigkeitseigenschaften auf.

Erfindungsgemäß ist eine Fertigungsanlage zum Herstellen von Brettschichtholz ausgebildet. Die Fertigungsanlage umfasst:
eine Schlichtstation zum Stapeln von einzelnen der Fertigungsanlage zugeführten Brettern;
eine Zuführvorrichtung zum Manipulieren und Zuführen der einzelnen Bretter zur Schlichtstation;
eine Leimstation zum Auftragen eines Klebstoffes, insbesondere Holzleim, auf die einzelnen Bretter;
eine Pressvorrichtung zum Verpressen der einzelnen zu einem Stapel geschlichteten Bretter. Die Pressvorrichtung weist mehrere Pressstempel auf mittels welchen eine im Wesentlichen normal auf die einzelnen Brettebenen wirkende Presskraft aufgebracht werden kann.

Es ist ein Transportmodul ausgebildet an welchem die einzelnen Bretter gestapelt werden können, wobei das Transportmodul zumindest zwischen der Schlichtstation und der Pressvorrichtung verschiebbar ist. Von Vorteil ist hierbei, dass durch diese Maßnahme die Effizienz der Fertigungsanlage erhöht werden kann, da die Fertigungsschritte des Stapelns und des Pressens parallel zueinander durchgeführt werden können.

Entsprechend einer vorteilhaften Weiterbildung kann vorgesehen sein, dass das Transportmodul eine in einem Winkel zur Senkrechten schräggestellte Anschlagfläche aufweist und ein Aufnahmeprofil aufweist, welches Verschiebbar am Transportmodul angeordnet ist, wobei eine Aufnahmefläche des Aufnahmeprofiles im rechten Winkel zur Anschlagfläche angeordnet ist. Von Vorteil ist hierbei, dass durch die Schrägstellung der Anschlagfläche in verbesserter Halt des Stapels am Transportmodul erreicht werden kann.

Die Pressvorrichtung weist ein Fixierelement auf mittels welchem das Transportmodul mit der Pressvorrichtung koppelbar ist, wobei das Fixierelement insbesondere durch Hebel gebildet ist, welche einen Haken aufweisen und durch Schwenken mit einem am Transportmodul angeordneten Formrohr formschlüssig verriegelbar sind. Von Vorteil ist hierbei, dass durch diese Maßnahme das Transportmodul direkt als Gegenanschlag für die Pressvorrichtung verwendet werden kann und somit der zu verpressende Stapel während des Pressvorganges im Transportmodul verbleiben kann.

Gemäß einer Weiterbildung ist es möglich, dass die Pressvorrichtung zusätzlich zu den Pressstempeln mittels welchen eine normal auf die einzelnen Brettebenen wirkende Presskraft aufgebracht werden kann, noch weitere Pressstempel aufweist, mittels welchen eine auf die Seitenflächen wirkende weitere Presskraft aufgebracht werden kann, wobei die beiden Presskräfte im rechten Winkel zueinander angeordnet sind. Durch die weitere Presskraft kann auch ein seitliches Ausrichten der einzelnen Bretter im Stapel erreicht werden.

Ferner kann es zweckmäßig sein, wenn dass die Pressvorrichtung derart dimensioniert ist, dass eine Presskraft auf die Gesamtpressfläche gesehen zwischen 120N/cm² und 10.000N/cm², insbesondere zwischen 150N/cm² und 7.000N/cm², bevorzugt zwischen 190N/cm² und 1.000N/cm² beträgt. Von Vorteil ist hierbei, dass bei diesen Werten der Presskraft bei Holz, insbesondere Fichtenholz, eine lokale Verformung von vorstehenden Bereichen erreicht werden kann.

Ferner kann vorgesehen sein, dass die einzelnen Bretter vor dem Auftragen von Leim an deren Deckfläche und Grundfläche Dickengehobelt werden, wobei zumindest bauchige Wölbungen von einzelnen Brettern entfernt werden, wobei jedoch die Dicke der Bretter nicht wesentlich verkleinert wird.

Unter Formabweichungen von einzelnen Brettern werden Dickenunterschiede von einzelnen in einer Brettebene liegenden Brettern und/oder Krümmungen von einzelnen in einer Brettebene liegenden Brettern verstanden.

Unter Brettschichtholz, auch Leimbinder genannt, werden einzelne Bretter verstanden, welche schichtartig übereinandergestapelt und durch einen Klebstoff miteinander verbunden und miteinander verpresst sind. Im Verbund des Brettschichtholzes werden die einzelnen Bretter auch als Lamellen bezeichnet.

Unter Klebstoff wird ein nichtmetallischer Werkstoff verstanden, der Fügeteile durch Adhäsion und Kohäsion verbinden kann. Ein bevorzugter Klebstoff zum Verbinden von Holzwerkstoffen wird als Holzleim bezeichnet. Als Klebstoff im Sinne dieses Dokumentes wird beispielsweise auch Harz gesehen, welches dazu geeignet ist, um zwei Holzwerkstoffe miteinander zu verbinden.

Die angegebene Presskraft bezieht sich immer auf die Gesamtpressfläche, wobei etwaige durch Formabweichung vorstehende Bereiche von Brettern eine lokal höhere Flächenpressung erfahren und dadurch verformt werden. Die angegebenen Presskräfte sind darüber hinaus für Fichtenholz optimiert. Wird anstatt von Fichtenholz ein härteres Holz verwendet, so kann es notwendig sein, die Presskräfte entsprechend der Druckfestigkeit des Holzes anzupassen. Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Stapels aus Brettern;
- Fig. 2: Stand der Technik des Verfahrensablauf zum Herstellen von Brettschichtholz;
- Fig. 3: ein Beispiel des Verfahrensablaufes zum Herstellen von Brettschichtholz;
- Fig. 4: eine schematische Seitenansicht der nötigen Verformung eines Brettes mit unterschiedlicher Dicke;
- Fig. 5: eine schematische Seitenansicht der nötigen Verformung eines Brettes mit einer Wölbung in Längsrichtung;
- Fig. 6: eine schematische Schnittdarstellung der nötigen Verformung eines Brettes mit einer Wölbung in Querrichtung;
- Fig. 7: eine schematische Schnittdarstellung der nötigen Verformung eines Brettes mit einer beidseitig bauchigen Wölbung;
- Fig. 8: eine perspektivische Darstellung eines Ausführungsbeispiels einer Fertigungsanlage zum Herstellen von Brettschichtholz;
- Fig. 9: eine perspektivische Darstellung eines Ausführungsbeispiels einer Schlichtstation;
- Fig. 10: eine Schnittdarstellung der Schlichtstation entsprechend der Schnittlinie X-X in Figur 9;
- Fig. 11: eine perspektivische Darstellung eines Ausführungsbeispiels einer Pressvorrichtung;
- Fig. 12: eine perspektivische Darstellung eines Ausführungsbeispiels einer Pressvorrichtung mit darin aufgenommenen Transportmodul;
- Fig. 13: eine perspektivische Darstellung eines Ausführungsbeispiels einer Übergabestation.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

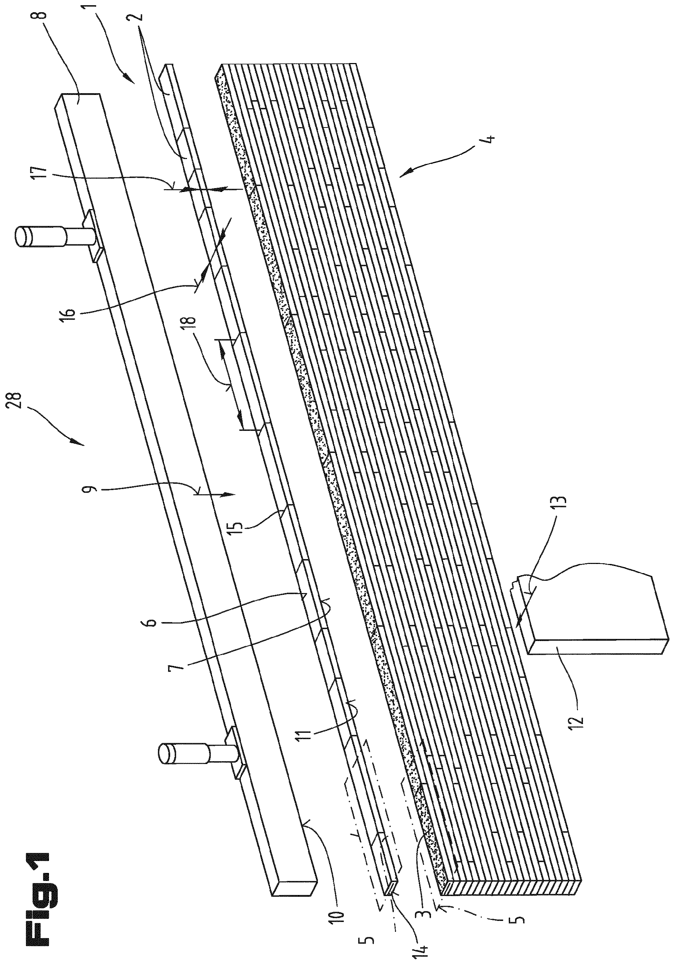

Fig. 1 zeigt eine perspektivische Ansicht eines Stapels 1 von einzelnen Brettern 2, welche mit einem Klebstoff 3 bestrichen sind und zu einem Brettschichtholz 4 verpresst werden. Insbesondere ist anhand der Fig. 1 der Aufbau des Brettschichtholzes 4 ersichtlich bzw. wird anhand dieser Figur das Verfahren zum Herstellen des Brettschichtholzes 4 erläutert.

Wie aus Fig. 1 ersichtlich, werden bei einem Brettschichtholz 4 die einzelnen Bretter 2 jeweils in einer Brettebene 5 angeordnet, wobei mehrere Brettebenen 5 übereinander angeordnet werden und durch Verkleben, insbesondere Verleimen, der einzelnen Brettebenen 5 das Brettschichtholz 4 hergestellt wird. Insbesondere ist dabei vorgesehen, dass jeweils eine Deckfläche 6 eines Brettes 2 mit Klebstoff 3, insbesondere Leim, benetzt wird und dass eine Grundfläche 7 eines in einer darüber liegenden Brettebene 5 angeordneten Brettes an diese mit Klebstoff 3 benetzten Deckfläche 6 des Brettes 2 angelegt wird. In einem weiteren Verfahrensschritt wird anschließend mit einem Pressstempel 8 eine Presskraft 9 auf die einzelnen Bretter 2 bzw. Brettebenen 5 ausgeübt, wobei die einzelnen Bretter 2 unlösbar zum Brettschichtholz 4 verbunden werden.

Entscheidend für die Qualität der Verpressung zwischen den einzelnen Brettern 2 ist eine Presskraft pro Flächeneinheit, beispielsweise angegeben in N/cm². Diese Presskraft pro Flächeneinheit ergibt sich aus der Presskraft 9, welche vom Pressstempel 8 auf die Bretter 2 ausgeübt wird und aus einer Gesamtpressfläche 10. Die Gesamtpressfläche 10 ist dabei jene Fläche, an welcher der Pressstempel 8 an den einzelnen Brettern 2 aufliegt bzw. diese kontaktiert.

Wie aus Fig. 1 ersichtlich, ist es zweckmäßig, wenn die Seitenflächen 11 der einzelnen Bretter 2 bündig zueinander abschließen, sodass das Brettschichtholz 4 eine ebene Seitenfläche aufweist. Um dies zu erreichen, kann vorgesehen sein, dass ein weiterer Pressstempel 12 ausgebildet ist, welcher mit einer weiteren Presskraft 13 auf die Seitenflächen 11 der Bretter 2 wirkt, um vorstehende Bretter einzuschieben.

Die Presskraft 9 des Pressstempels 8 wirkt vorzugsweise im rechten Winkel auf die einzelnen Brettebenen 5 bzw. die Deckflächen 6 und Grundflächen 7 der Bretter 2. Natürlich sind auch geringfügige Abweichungen von dieser rechtwinkeligen Wirkrichtung möglich.

Die weitere Presskraft 13 wirkt vorzugsweise im rechten Winkel auf die Seitenfläche 11 der Bretter 2 und somit auch im rechten Winkel auf die Presskraft 9.

Wie aus Fig. 1 weiters ersichtlich, kann vorgesehen sein, dass in einzelnen Brettebenen 5 mehrere Bretter 2 angeordnet sind, wobei die einzelnen Bretter 2 an deren Stirnseite 14 in einem Stoß 15 aneinander anschließen. Dabei ist es zweckmäßig, wenn die Stöße 15 der unterschiedlichen Brettebenen 5 versetzt zueinander angeordnet sind.

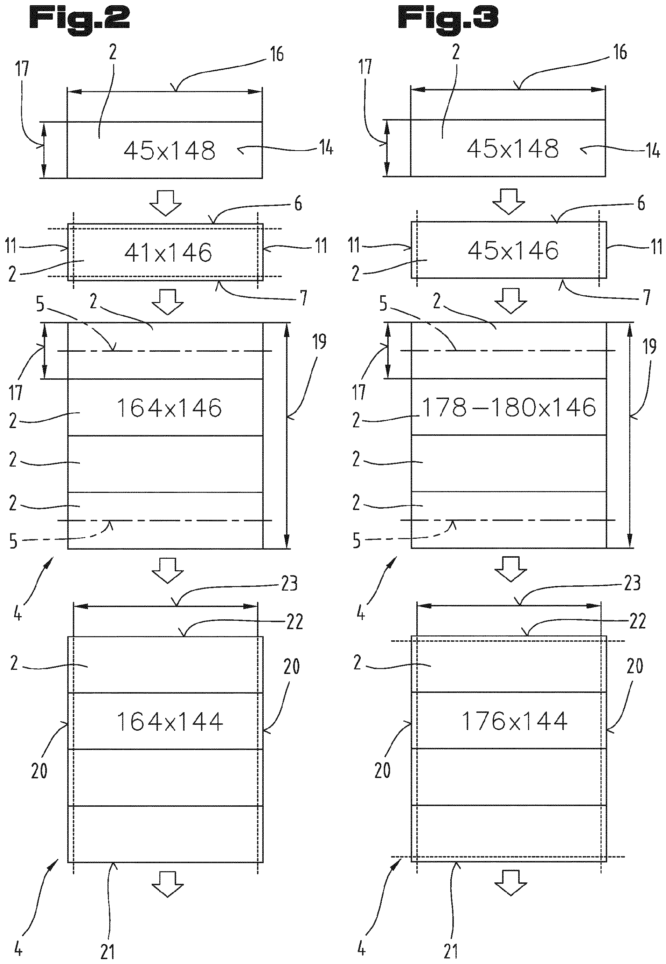

In Fig. 2 wird in einer schematischen Darstellung der herkömmliche Ablauf zum Herstellen eines Brettschichtholzes 4 beschrieben. Insbesondere ist dabei die Ansicht derart gewählt, dass eine Stirnseite 14 eines Brettes 2 ersichtlich ist. Das Verfahren wird anhand eines exemplarischen Rohbrettes mit einer Breite 16 von 148 mm und einer Dicke 17 von 45 mm beschrieben.

In einem ersten Verfahrensschritt wird das Brett 2 sowohl an der Grundfläche 7 als auch an der Deckfläche 6 sowie den Seitenflächen 11 abgehobelt, sodass es über die gesamte Länge 18 einen gleichmäßigen Querschnitt aufweist. Nach diesem Verfahrensschritt kann die Breite 16 des Brettes 2 146 mm betragen und die Dicke 17 des Brettes 2 41 mm betragen. Anschließend werden die einzelnen Bretter 2 an deren Deckfläche 6 mit Klebstoff 3 bestrichen und miteinander verpresst. Eine Gesamthöhe 19 des Brettschichtholzes 4 ergibt sich aus den einzelnen Dicken 17 der Bretter 2 und kann beispielsweise bei vier übereinander geschlichteten Brettern 2 164 mm betragen. Nach dem Verleimen der einzelnen Bretter 2 werden die Seitenflächen 20 des Brettschichtholzes 4 abgehobelt, um eine gleichmäßige Oberfläche der Seitenflächen 20 zu erreichen. Die Grundfläche 21 bzw. die Deckfläche 22 des Brettschichtholzes 4 braucht bei diesem Verfahrensablauf nicht bearbeitet zu werden. Das fertige Brettschichtholz 4 mit einer Gesamthöhe 19 von 164 mm und einer Breite 23 von 144 mm wird anschließend der weiteren Bearbeitung zugeführt.

In Fig. 3 ist das erfindungsgemäße Verfahren zum Herstellen eines Brettschichtholzes 4 dargestellt und direkt mit dem herkömmlichen Verfahren nach Fig. 2 verglichen. Exemplarisch wird hier zum Vergleich ebenfalls ein Rohbrett mit einer Breite 16 von 148 mm und einer Dicke 17 von 45 mm herangezogen.

In einem ersten Verfahrensschritt kann vorgesehen sein, dass die Seitenflächen 11 des Brettes 2 bearbeitet werden und somit die Breite 16 des Brettes 2 auf 146 mm reduziert wird. Im erfindungsgemäßen Verfahren ist vorgesehen, dass die Grundfläche 7 bzw. die Deckfläche 6 des Brettes 2 nicht oder nur geringfügig bearbeitet werden, sodass sich die Dicke 17 des Brettes 2 nicht wesentlich verändert.

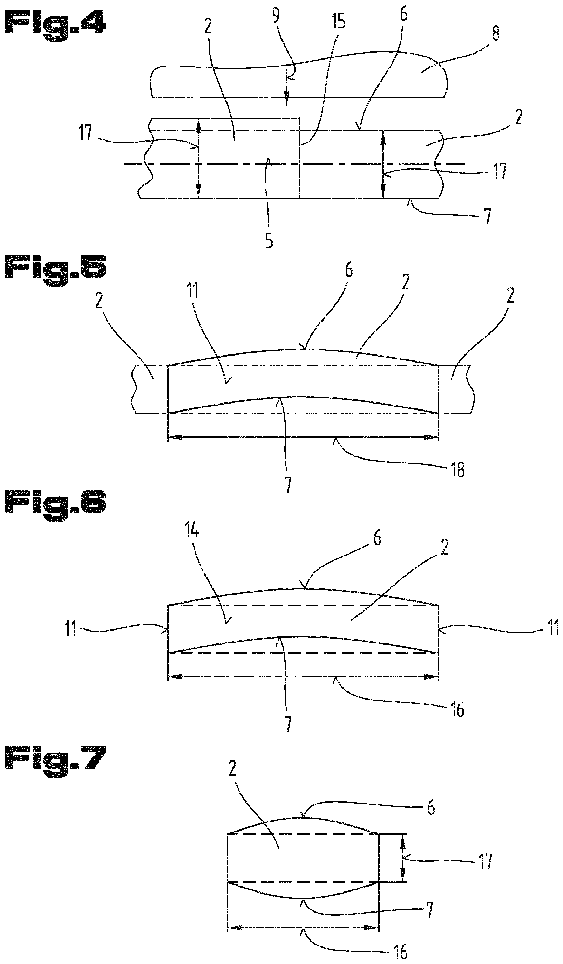

Anschließend werden die einzelnen Bretter 2 mit Klebstoff 3 versehen und übereinander gestapelt und in weiterer Folge miteinander verpresst. Beim Verpressen wird dabei die Presskraft so groß gewählt, dass mögliche Verformungen bzw. Dickenunterschiede von einzelnen in einer Brettebene 5 liegenden Brettern 2 dadurch ausgeglichen werden, dass die einzelnen Bretter 2 plastisch verformt werden. Dies wird in den Beispielen der Figuren 4 bis 7 noch näher beschrieben. Die Gesamthöhe 19 des Brettschichtholzes 4 beträgt bei vier übereinander gestapelten Brettern 2 nach dem beschriebenen Verpressvorgang in etwa 178 bis 180 mm.

In einem weiteren Verfahrensschritt wird anschließend sowohl die Grundfläche 21 des Brettschichtholzes 4 als auch die Deckfläche 22 des Brettschichtholzes 4 und ebenfalls die Seitenflächen 20 des Brettschichtholzes 4 bearbeitet bzw. abgehobelt. Das Endmaß des Brettschichtholzes 4 kann anschließend eine Gesamthöhe 19 von 176 mm und eine Breite 23 von 144 mm aufweisen. Im Vergleich zum herkömmlichen Herstellverfahren, welches in Fig. 2 beschrieben wurde, ergibt sich dabei eine um 12 mm höhere Gesamthöhe 19 des Brettschichtholzes 4 und somit eine um 7 % gesteigerte Ausbeute aus dem eingesetzten Holz.

In den Figuren 4 bis 7 sind exemplarische Formabweichungen von Brettern 2 gezeigt, wobei wiederum für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

Fig. 4 zeigt eine exemplarische Seitenansicht zweier Bretter 2, welche in einer Brettebene 5 liegen. Wie aus Fig. 4 ersichtlich, kann es vorkommen, dass bei dem erfindungsgemäßen Herstellverfahren von Brettschichtholz 4 einzelne im Stoß 15 aneinander anschließende Bretter 2 eine unterschiedliche Dicke 17 aufweisen. Die mit dem Pressstempel 8 aufgebrachte Presskraft 9 muss dabei so groß gewählt werden, dass das dickere der beiden Bretter 2 plastisch verformt und zusammengedrückt wird, sodass es an das dünnere der beiden Bretter 2 angepasst wird. Dies ist durch eine strichlierte Linie im dickeren der beiden Bretter 2 dargestellt.

Fig. 5 zeigt eine weitere mögliche Fehlbildung eines Brettes 2, wobei es vorkommen kann, dass das Brett 2 über dessen Länge 18 gesehen krumm ist. Eine derartige Wölbung muss ebenfalls durch mechanische Verformung durch den Pressstempel 8 ausgeglichen werden.

Fig. 6 zeigt den Querschnitt eines Brettes 2. Wie aus Fig. 6 ersichtlich, kann es vorkommen, dass eine Wölbung, welche sich über die Breite 16 des Brettes 2 erstreckt ausgebildet ist. Diese muss ebenfalls durch die Presskraft 9 des Pressstempels 8 ausgeglichen werden.

Fig. 7 zeigt ein weiteres Beispiel einer Verformung eines Brettes 2, wobei der Querschnitt des Brettes 2 ersichtlich ist. Bei einer derartigen Schüsselung bzw. bauchigen Verformung des Brettes 2 kann vorgesehen sein, dass ebenfalls durch die Presskraft 9 des Pressstempels 8 ein Ausgleich dieser Verformung erreicht wird.

Bei allen in den Fig. 4 bis 7 dargestellten Abweichungen des Rohbrettes 2 kann vorgesehen sein, dass vor dem Einlegen des Brettes 2 in den Stapel 1 die Deckfläche 6 bzw. die Grundfläche 7 des Brettes 2 geringfügig mechanisch bearbeitet werden, etwa abgehobelt werden, wobei keine wesentliche Abnahme der Dicke 17 des Brettes 2 aufgrund der Bearbeitung vorgesehen ist. Diese Maßnahme kann dazu dienen, um zusätzlich zur Verformung des Brettes 2 etwaige Formfehler ausgleichen zu können.

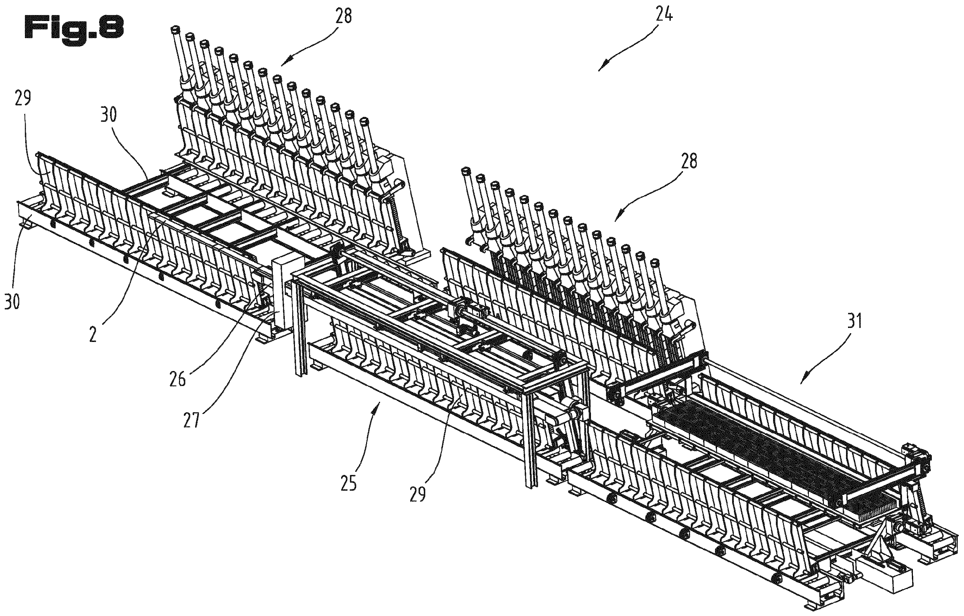

Fig. 8 zeigt eine perspektivische Ansicht eines Ausführungsbeispiels einer Fertigungsanlage 24 zum Herstellen von Brettschichthölzern 4. Die Fertigungsanlage 24 umfasst eine Schlichtstation 25 in welcher die einzelnen Bretter 4 übereinander geschlichtet und zu einem Stapel 1 gestapelt werden. Weiters umfasst die Fertigungsanlage 24 eine Zuführvorrichtung 26 mittels welcher die Bretter 2 zur Schlichtstation 25 zugeführt werden können.

Außerdem ist eine Leimstation 27 vorgesehen, in welcher Klebstoff 3 auf die einzelnen Bretter 2 aufgebracht wird. Vorzugsweise wird der Klebstoff 3 in der Leimstation 27 auf die Deckfläche 6 der Bretter 2 aufgetragen. Es ist jedoch auch denkbar, dass weitere Flächen der Bretter 2 mit Klebstoff 3 versehen werden. Die Bevorzugte Art von Klebstoff 3 ist Holzleim, woher die Namensgebung der Leimstation 27 kommt. Es ist jedoch klar, dass in der Leimstation 27 sämtliche Arten von Klebstoff 3 auf die Bretter 2 aufgetragen werden können.

Weiters ist eine Pressvorrichtung 28 vorgesehen, in welcher die zum Stapel 1 gestapelten Bretter 2 miteinander verpresst werden. Im in Fig. 8 dargestellten Ausführungsbeispiel der Fertigungsanlage 24 sind zur Erhöhung der Effizienz zwei Pressvorrichtungen 28 vorgesehen, welche von der einen Schlichtstation 25 bedient werden.

Wie aus Fig. 8 ersichtlich, weist die Fertigungsanlage 24 ein Transportmodul 29 auf, welches zum Transportieren der geschlichteten Stapel 1 bzw. des fertigen Brettschichtholzes 4 dient. Das Transportmodul 29 kann in die Schlichtstation 25 eingesetzt werden, um dort mit Brettern 2 beladen zu werden. Anschließend kann das Transportmodul 29 mittels einem Transportmodulförderer 30 zu einer der beiden Pressvorrichtungen 28 transportiert werden. Der Transportmodulförderer 30 kann dabei aus mehreren einzelnen Fördereinheiten bestehen, welche nacheinander geschalten sind. In weiteren Verfahrensschritt zum Herstellen der Brettschichthölzer 4 kann in der Pressvorrichtung 28 der Stapel 1 aus einzelnen Brettern 2 durch Aufbringen der Presskraft 9 verpresst werden. Anschließend kann das Brettschichtholz 4 in einer Übergabestation 31 aus dem Transportmodul 29 entnommen werden und seiner weiteren Bearbeitung zugeführt werden. Dadurch wird in der Übergabestation 31 das Transportmodul 29 entleert und kann mittels dem Transportmodulförderer 30 wieder der Schlichtstation 25 zugeführt werden.

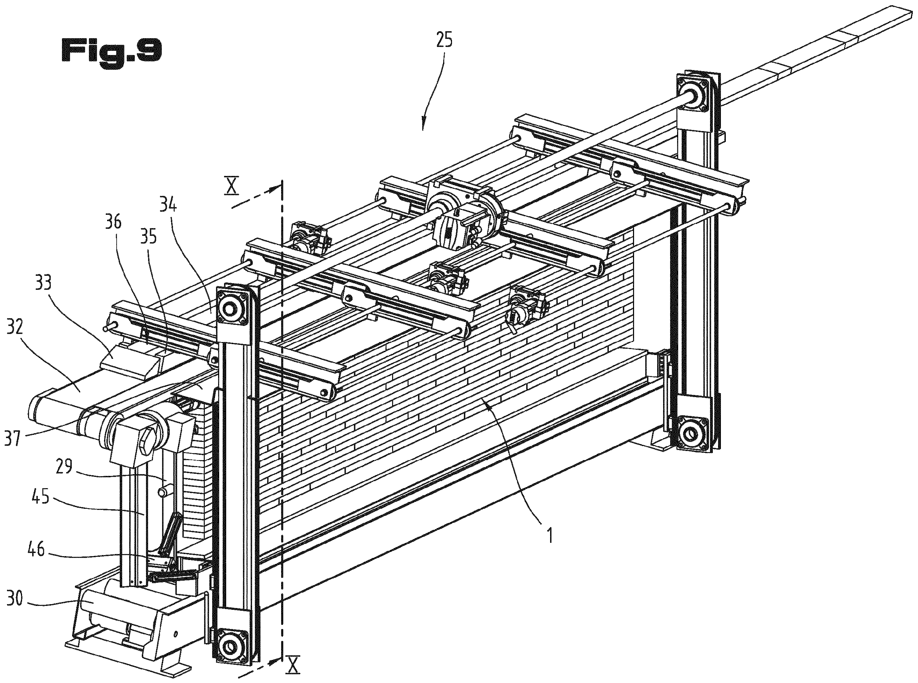

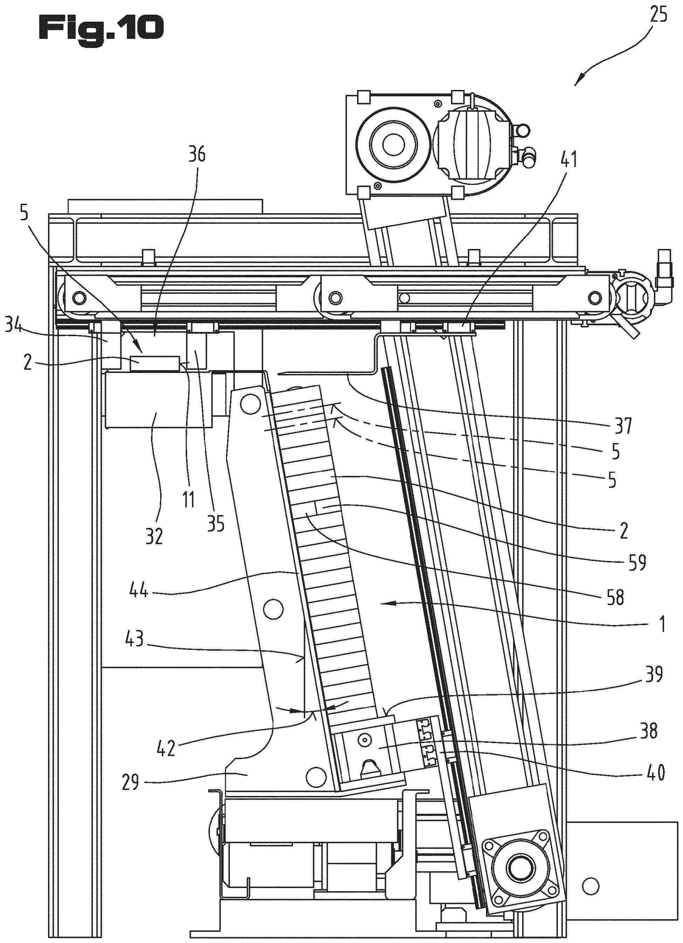

In den Figuren 9 und 10 ist eine weitere und gegebenenfalls für sich eigenständige Ausführungsform der Schlichtstation 25 gezeigt, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Fig. 9 zeigt eine perspektivische Ansicht der Schlichtstation 25. In Fig. 10 ist die Schlichtstation 25 gemäß der Schnittlinie X ― X aus Fig. 9 geschnitten dargestellt. Die Funktionsweise der Schlichtstation 25 bzw. deren Bauteile werden anhand einer Zusammenschau der Figuren 9 und 10 beschrieben.

Die einzelnen vorbereiteten und bereits mit Klebstoff 3 versehenen Bretter 2 werden mittels einem Fördermittel 32 in Längsrichtung der Bretter 2 transportiert. Dabei ist ein Längsanschlag 33 vorgesehen, welcher variabel verstellt werden kann und die Position der Stirnseite 14 des ersten Brettes 2 einer Brettebene 5 festlegt. Darüber hinaus sind ein erster Schieber 34 und ein zweiter Schieber 35 ausgebildet, welche zur Anlage an einer Seitenfläche 11 des Brettes 2 und somit zur seitlichen Zentrierung des Brettes 2 vorgesehen sind.

Wenn eine ausreichende Anzahl von Bretter 2 zum Erstellen einer Brettebene 5 in einem durch die Schieber 34, 35 bzw. den Längsanschlag 33 begrenzten Einlaufkanal 36 aufgenommen sind, so können die Bretter 2 mittels den Schiebern 34, 35 geklemmt und auf eine Zwischenablage 37 befördert werden.

Unterhalb der Zwischenablage 37 ist das Transportmodul 29 angeordnet, welches zur Aufnahme der Bretter 2 bereitsteht. Insbesondere kann vorgesehen sein, dass das Transportmodul 29 ein Aufnahmeprofil 38 aufweist, in welchem an der Oberseite eine Aufnahmefläche 39 ausgebildet ist, welche zur Aufnahme der einzelnen Bretter 2 dient. Das Aufnahmeprofil 38 kann mit einer Profilverschiebevorrichtung 40 gekoppelt sein und mittels dieser in der Höhe verschoben werden. Dadurch kann erreicht werden, dass das Aufnahmeprofil 38 an den aktuellen Stapelzustand bzw. die Anzahl der aktuell gestapelten Brettebenen 5 angepasst werden kann.

Wenn das Aufnahmeprofil 38 soweit nach oben verschoben ist, dass das abzulegende Brett 2 auf den Stapel der bereits vorhandenen Brettebenen 5 abgelegt werden kann, wird die Zwischenablage 37 mittels deren Antriebseinheit 41 verschoben, wobei das Brett 2 mit dessen Seitenfläche 11 am zweiten Schieber 35 anliegt und dadurch von der Zwischenablage 37 auf den Stapel 1 der bereits geschlichteten Bretter 2 hinunterfällt. Der erste Schieber 34 wird für diesen Verfahrensschritt des Abschiebens der Bretter 2 nicht benötigt und kann daher bereits vor diesem Verfahrensschritt wieder in seine Ausgangslage zur Begrenzung des Einlaufkanals 36 zurückgebracht werden.

In weiterer Folge kann das Aufnahmeprofil 38 des Transportmoduls 29 um den Betrag der Dicke 17 des Brettes 2 nach unten verschoben werden und die Zwischenablage 37 wieder in ihre Ausgangsposition verschoben werden, um zur Aufnahme einer neuen Brettebene 5 vorbereitet zu werden.

Wie aus Fig. 10 weiters ersichtlich, kann vorgesehen sein, dass das Transportmodul 29 eine in einem Winkel 42 zur Senkrechten 43 schräg gestellte Anschlagfläche 44 aufweist. Durch die Schrägstellung der Anschlagfläche 44 kann erreicht werden, dass die Seitenflächen 11 der Bretter 2 zueinander ausgerichtet werden und dass darüber hinaus der Halt des Stapels 1 im Transportmodul 29 verbessert wird.

Wenn der Stapel 1 mit der vorgesehenen Anzahl an Brettebenen 5 bestückt ist, wird das Aufnahmeprofil 38 von der Profilverschiebevorrichtung 40 entkoppelt und kann das Transportmodul 29 mit dem darauf aufgenommenen Stapel 1 zur Pressvorrichtung 28 transportiert werden.

Anschließend kann ein leeres Transportmodul 29 in die Schlichtstation 25 eingeschoben werden, wobei ein erster Abscherer 45 vorgesehen sein kann, welcher beim Einschieben des Transportmoduls 29 auf die Anschlagfläche 44 wirkt und diese von Rückständen des Klebstoffes 3 befreien kann. Darüber hinaus kann ein zweiter Abscherer 46 vorgesehen sein, welcher auf die Aufnahmefläche 39 wirkt und diese ebenfalls von Rückständen des Klebstoffes 3 befreien kann.

Wie in Fig. 10 weiters ersichtlich, kann vorgesehen sein, dass eines oder mehrere der Bretter 2 aus einer ersten Bretthälfte 58 und einer zweiten Bretthälfte 59 zusammengesetzt sind. Die beiden Bretthälften 58, 59 können ebenfalls mit Klebstoff 3 miteinander verbunden sein. Darüber hinaus kann die weitere Presskraft 13 analog zur Presskraft 9 so groß bemessen sein, um einen Spalt zwischen den beiden Bretthälften 58, 59 durch plastische Verformung einer der beiden Bretthälften 58, 59 schließen zu können.

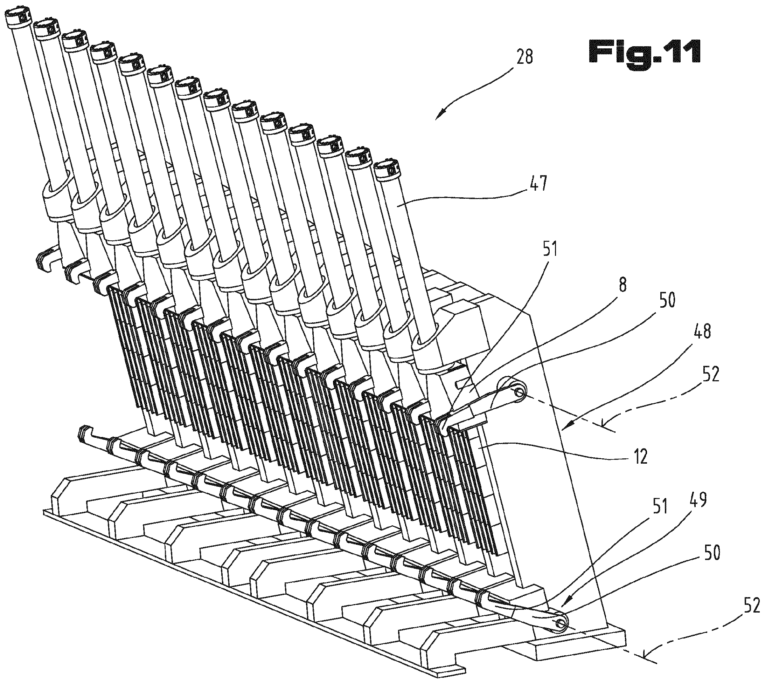

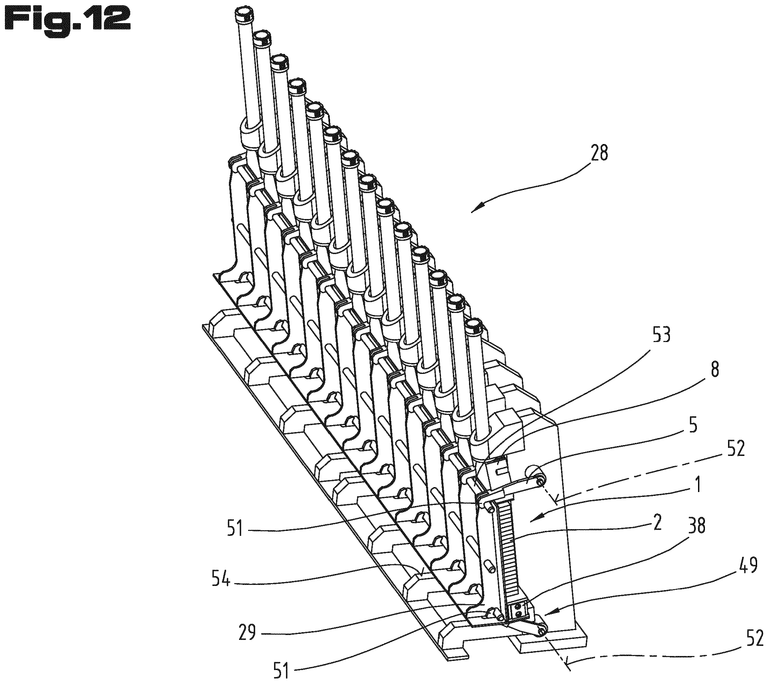

In den Figuren 11 und 12 ist eine weitere und gegebenenfalls für sich eigenständige Ausführungsform Pressvorrichtung 28 gezeigt, wobei wiederum für gleiche Teile gleiche Bezugszeichen bzw. Bauteilbezeichnungen wie in den vorangegangenen Figuren 1 bis 10 verwendet werden. Um unnötige Wiederholungen zu vermeiden, wird auf die detaillierte Beschreibung in den vorangegangenen Figuren 1 bis 10 hingewiesen bzw. Bezug genommen.

Fig. 11 zeigt eine perspektivische Ansicht der Pressvorrichtung 28 ohne darin aufgenommenem Transportmodul 29 und Fig. 12 zeigt eine perspektivische Ansicht der Pressvorrichtung 28 mit darin aufgenommenem Transportmodul 29.

Wie aus Fig. 11 ersichtlich, weist die Pressvorrichtung 28 mehrere Pressstempel 8 auf, welche zum Verpressen des Stapels 1 ausgebildet sind. Die Pressstempel 8 werden von einer Antriebseinheit 47 bewegt bzw. angetrieben. Die Antriebseinheit 47 kann beispielsweise durch eine Stellspindel oder durch einen Hydraulikzylinder gebildet sein.

Darüber hinaus sind weitere Pressstempel 12 vorgesehen, welche jeweils von einer weiteren Antriebseinheit 48 angetrieben werden. Die weitere Antriebseinheit 48 kann gleich wie die Antriebseinheit 47 durch verschiedenste Stellmittel gebildet sein. Die Funktion der weiteren Pressstempel 12 wurde bereits in der Beschreibung zu Fig. 1 erklärt.

Weiters ist vorgesehen, dass die Pressvorrichtung 28 ein Fixierelement 49 aufweist, mittels welchem das Transportmodul 29 mit der Pressvorrichtung 28 koppelbar ist. Das Fixierelement 49 kann einen Hebel 50 aufweisen, welcher an dessen Ende einen Haken 51 aufweist, und schwenkbar bezüglich einer Schwenkachse 52 gelagert ist. Insbesondere kann vorgesehen sein, dass durch Einschwenken des Hebels 50 dieser mit einem Formstück 53 in Eingriff bringbar ist und das Transportmodul 29 dadurch an der Pressvorrichtung 28 fixiert wird. Das Formstück 53 kann beispielsweise durch ein Formrohr oder durch Vollmaterial gebildet sein.

In Fig. 12 ist die Pressvorrichtung 28 in einer perspektivischen Ansicht dargestellt, wobei das Transportmodul 29 durch das Fixierelement 49 mit der Pressvorrichtung 28 verriegelt ist. Wie aus Fig. 12 weiters ersichtlich, ist das Aufnahmeprofil 38 des Transportmoduls 29 am Transportmodul 29 abgelegt, sodass die durch die Pressstempel 8 eingeleiteten Kräfte vom Transportmodul 29 aufgenommen werden können. Das Transportmodul 29 stützt sich hierbei an einer Aufnahmeebene 54 der Pressvorrichtung 28 ab.

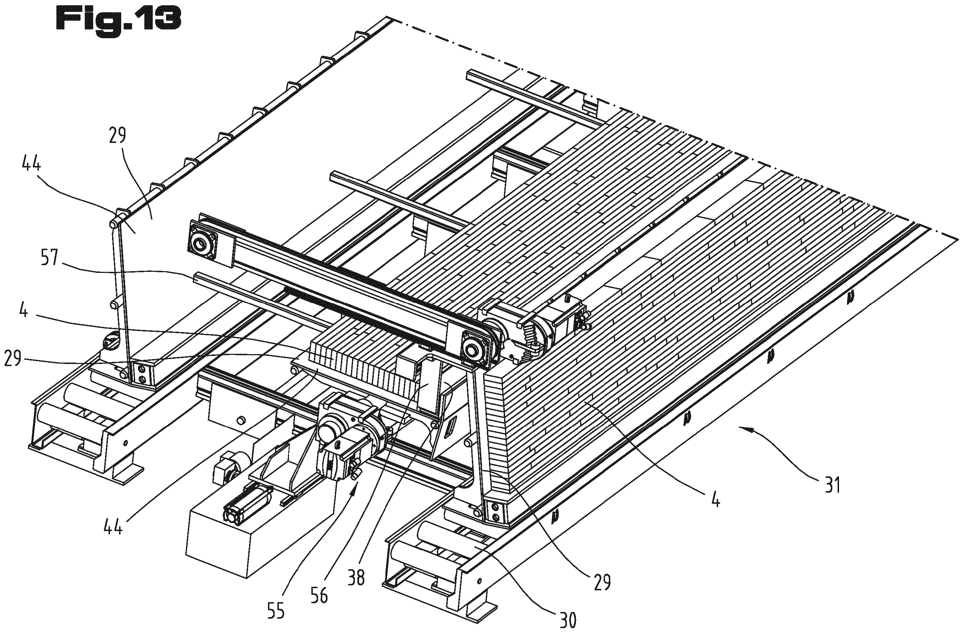

In der Fig. 13 ist eine weitere und gegebenenfalls für sich eigenständige Ausführungsform der Übergabestation 31 gezeigt, wobei wiederum für gleiche Teile gleiche Bezugszeichen bzw. Bauteilbezeichnungen wie in den vorangegangenen Figuren 1 bis 12 verwendet werden. Um unnötige Wiederholungen zu vermeiden, wird auf die detaillierte Beschreibung in den vorangegangenen Figuren 1 bis 12 hingewiesen bzw. Bezug genommen.

Fig. 13 zeigt in einer perspektivischen Ansicht die Details der Übergabestation 31. Wie aus Fig. 13 ersichtlich, kann vorgesehen sein, dass in der Übergabestation 31 eine Schwenkvorrichtung 55 angeordnet ist, welche dazu ausgebildet ist, um das Transportmodul 29, insbesondere die Anschlagfläche 44 aus einer annähernd vertikalen Position in eine horizontale Position zu verschwenken. Durch diese Verschwenkung liegen die einzelnen Brettschichthölzer 4 horizontal auf der Aufnahmefläche 39. Anschließend kann eine Abschiebevorrichtung 56 mit dem Aufnahmeprofil 38 gekoppelt werden, um mittels dem Aufnahmeprofil 38 die Brettschichthölzer 4 auf ein Ablageprofil 57 abschieben zu können, von wo es mittels einer Manipulationsvorrichtung aufgenommen und seiner Weiterverarbeitung zugeführt werden kann.

Das entleerte Transportmodul 29 kann anschließend mittels dem Transportmodulförderer 30 wie schon beschrieben der Schlichtstation 25 zugeführt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Stapel | 31 | Übergabestation |
| 2 | Brett | 32 | Fördermittel |
| 3 | Klebstoff | 33 | Längsanschlag |
| 4 | Brettschichtholz | 34 | erster Schieber |
| 5 | Brettebene | 35 | zweiter Schieber |
| 6 | Deckfläche Brett | 36 | Einlaufkanal |
| 7 | Grundfläche Brett | 37 | Zwischenablage |
| 8 | Pressstempel | 38 | Aufnahmeprofil |
| 9 | Presskraft | 39 | Aufnahmefläche |
| 10 | Gesamtpressfläche | 40 | Profilverschiebevorrichtung |
| 11 | Seitenfläche Brett | 41 | Antriebseinheit Zwischenablage |
| 12 | weitere Pressstempel | 42 | Winkel |
| 13 | weitere Presskraft | 43 | Senkrechte |
| 14 | Stirnseite Brett | 44 | Anschlagfläche |
| 15 | Stoß | 45 | erster Abscherer |
| 16 | Breite Brett | 46 | zweiter Abscherer |
| 17 | Dicke Brett | 47 | Antriebseinheit |
| 18 | Länge Brett | 48 | weitere Antriebseinheit |
| 19 | Gesamthöhe Brettschichtholz | 49 | Fixierelement |
| 20 | Seitenfläche Brettschichtholz | 50 | Hebel |
| 21 | Grundfläche Brettschichtholz | 51 | Haken |
| 22 | Deckfläche Brettschichtholz | 52 | Schwenkachse |
| 23 | Breite Brettschichtholz | 53 | Formstück |
| 24 | Fertigungsanlage | 54 | Aufnahmeebene |
| 25 | Schlichtstation | 55 | Schwenkvorrichtung |
| 26 | Zuführvorrichtung | 56 | Abschiebevorrichtung |
| 27 | Leimstation | 57 | Ablageprofil |
| 28 | Pressvorrichtung | 58 | erste Bretthälfte |
| 29 | Transportmodul | 59 | zweite Bretthälfte |
| 30 | Transportmodulförderer | | |

## Patentansprüche

1. Verfahren zum Herstellen von Brettschichtholz (4), wobei das Verfahren folgende Verfahrensschritte umfasst:
- Bereitstellen von einzelnen Brettern (2) mittels einer Zuführvorrichtung (26), wobei die Bretter (2) aus Holzstämmen geschnitten sind;
- Auftragen eines Klebstoffes (3), insbesondere Holzleim, auf die einzelnen Bretter (2) in einer Leimstation (27);
- Schlichten der einzelnen Bretter (2) zu einem Stapel (1) mit mehreren Brettebenen (5) in einer Schlichtstation (25), wobei in zumindest einer der Brettebenen (5) zwei einzelne Bretter (2) angeordnet sind, welche an deren Stirnseite (14) aneinander anliegen;
- Verpressen der zu dem Stapel (1) geschlichteten Bretter (2) zu einem Brettschichtholz (4) mittels einer Pressvorrichtung (28) durch aufbringen einer Presskraft (9), wobei die Grundfläche (7) der Bretter (2) einer Brettebene (5) an die Deckfläche (6) der Bretter (2) einer darunter liegenden Brettebene (5) angedrückt wird,
wobei die Presskraft (9) so groß gewählt ist, dass zumindest einzelne in einer Brettebene (5) liegende Bretter (2) plastisch verformt werden um eine weitestgehend spaltenfreie Verbindung der Grundflächen (7) und Deckflächen (6) von einzelnen Brettern (2) zwischen unterschiedlichen Brettebenen (5) zu erreichen,
**dadurch gekennzeichnet, dass** ein Transportmodul (29) ausgebildet ist an welchem die einzelnen Bretter (2) gestapelt werden, wobei das Transportmodul (29) zumindest zwischen der Schlichtstation (25) und der Pressvorrichtung (28) verschoben wird,
wobei die Pressvorrichtung (28) ein Fixierelement (49) aufweist mittels welchem das Transportmodul (29) mit der Pressvorrichtung (28) gekoppelt wird, wobei das Fixierelement (49) insbesondere durch Hebel (50) gebildet ist, welche einen Haken (51) aufweisen und durch Schwenken mit einem am Transportmodul (29) angeordneten Formstück (53) formschlüssig verriegelt werden.

2. Verfahren nach Anspruch 1, **dadurch gekennzeichnet, dass** die Presskraft (9) pro cm² größer ist als die Druckfestigkeit des zu verarbeitenden Holzes.

3. Verfahren nach Anspruch 1 oder 2, **dadurch gekennzeichnet, dass** die Presskraft (9) auf die Gesamtpressfläche (10) gesehen zwischen 120N/cm² und 10.000N/cm², insbesondere zwischen 150N/cm² und 7.000N/cm², bevorzugt zwischen 190N/cm² und 1.000N/cm² beträgt.

4. Verfahren nach einem der vorhergehenden Ansprüche, **dadurch gekennzeichnet, dass** die einzelnen Bretter (2) vor dem Auftragen von Klebstoff (3) an deren Seitenflächen (11) Breitengehobelt werden, wobei die Deckfläche (6) und die Grundfläche (7) der einzelnen Bretter (2) nicht bearbeitet wird.

5. Verfahren nach einem der vorhergehenden Ansprüche, **dadurch gekennzeichnet, dass** das Brettschichtholz (4) nach dem Verpressen an der Grundfläche (21) und der Deckfläche (22) des Brettschichtholzes (4) dickengehobelt wird und dass die Seitenflächen (20) des Brettschichtholzes (4) breitengehobelt werden.

6. Verfahren nach einem der vorhergehenden Ansprüche, **dadurch gekennzeichnet, dass** die Bretter (2) derart abgelängt oder sortiert werden, sodass die Stöße (15) zwischen den einzelnen sich in einer Brettebene (5) befindlichen Brettern (2) relativ zu Stößen (15) zwischen einzelnen sich in einer anschließenden Brettebene (5) befindlichen Brettern (2) versetzt angeordnet werden.

7. Verfahren nach einem der vorhergehenden Ansprüche, **dadurch gekennzeichnet, dass** an den Brettern (2) von einzelnen zwischenliegenden Brettebenen (5) kein Klebstoff (3) aufgetragen wird, sodass im Stapel (1) mehrere voneinander lösbare Brettschichthölzer (4) hergestellt werden.

8. Verfahren nach einem der vorhergehenden Ansprüche, **dadurch gekennzeichnet, dass** die einzelnen stirnseitig aneinander liegenden Bretter (2) vor dem Auftragen von Klebstoff (3) keilgezinkt werden.

9. Verfahren nach einem der vorhergehenden Ansprüche, **dadurch gekennzeichnet, dass** nach dem Verpressen das Brettschichtholz (4) in Scheiben geschnitten wird, welche zu einer Platte zusammengeleimt werden und als Mittelschicht in einer Dreischichtplatte verbaut werden.

10. Fertigungsanlage (24) zum Herstellen von Brettschichtholz (4), insbesondere zum Durchführen eines Verfahrens nach einem der vorhergehenden Ansprüche, die Fertigungsanlage (24) umfassend:
eine Schlichtstation (25) zum Stapeln von einzelnen der Fertigungsanlage (24) zugeführten Brettern (2);
eine Zuführvorrichtung (26) zum Manipulieren und Zuführen der einzelnen Bretter (2) zur Schlichtstation (25);
eine Leimstation (27) zum Auftragen eines Klebstoffes (3), insbesondere Holzleim, auf die einzelnen Bretter (2);
eine Pressvorrichtung (28) zum Verpressen der einzelnen zu einem Stapel (1) geschlichteten Bretter (2),
wobei die Pressvorrichtung (28) mehrere Pressstempel (8) aufweist mittels welchen eine im Wesentlichen normal auf die einzelnen Brettebenen (5) wirkende Presskraft (9) aufgebracht werden kann,
wobei die Pressvorrichtung (28) derart ausgebildet ist, dass die Presskraft (9) so groß wählbar ist, dass zumindest einzelne in einer Brettebene (5) liegende Bretter (2) plastisch verformt werden um eine weitestgehend spaltenfreie Verbindung der Grundflächen (7) und Deckflächen (6) von einzelnen Brettern (2) zwischen unterschiedlichen Brettebenen (5) zu erreichen, wobei ein Transportmodul (29) ausgebildet ist an welchem die einzelnen Bretter (2) gestapelt werden können, wobei das Transportmodul (29) zumindest zwischen der Schlichtstation (25) und der Pressvorrichtung (28) verschiebbar ist,
**dadurch gekennzeichnet, dass**
die Pressvorrichtung (28) ein Fixierelement (49) aufweist mittels welchem das Transportmodul (29) mit der Pressvorrichtung (28) koppelbar ist, wobei das Fixierelement (49) insbesondere durch Hebel (50) gebildet ist, welche einen Haken (51) aufweisen und durch Schwenken mit einem am Transportmodul (29) angeordneten Formstück (53) formschlüssig verriegelbar sind.

11. Fertigungsanlage nach Anspruch 10 **dadurch gekennzeichnet, dass** das Transportmodul (29) eine in einem Winkel (42) zur Senkrechten (43) schräggestellte Anschlagfläche (44) aufweist und ein Aufnahmeprofil (38) aufweist, welches Verschiebbar am Transportmodul (29) angeordnet ist, wobei eine Aufnahmefläche (39) des Aufnahmeprofiles (38) im rechten Winkel zur Anschlagfläche (44) angeordnet ist.

12. Fertigungsanlage nach einem der Ansprüche 10 oder 11, **dadurch gekennzeichnet, dass** die Pressvorrichtung (28) zusätzlich zu den Pressstempeln (8) mittels welchen eine normal auf die einzelnen Brettebenen (5) wirkende Presskraft (9) aufgebracht werden kann, noch weitere Pressstempel (12) aufweist, mittels welchen eine auf die Seitenflächen (11) wirkende weitere Presskraft (13) aufgebracht werden kann, wobei die beiden Presskräfte (9, 13) im rechten Winkel zueinander angeordnet sind.

13. Fertigungsanlage nach einem der Ansprüche 10 bis 12, **dadurch gekennzeichnet, dass** die Pressvorrichtung (28) derart dimensioniert ist, dass eine Presskraft (9) auf die Gesamtpressfläche (10) gesehen zwischen 120N/cm² und 10.000N/cm², insbesondere zwischen 150N/cm² und 7.000N/cm², bevorzugt zwischen 190N/cm² und 1.000N/cm² beträgt.

## Claims

1. A method for producing glued laminated timber (4), wherein the method comprises the following method steps:
- providing individual boards (2) by means of a feed device (26), wherein the boards (2) are cut from logs;
- applying an adhesive (3), in particular wood glue, to the individual boards (2) in a gluing station (27);
- stacking the individual boards (2) to form a stack (1) with multiple board planes (5) in a stacking station (25), wherein in at least one of the board planes (5), two individual boards (2) are arranged, which abut one another on their front sides (14);
- pressing the boards (2) stacked into a stack (1) to form glued laminated timber (4) by means of a pressing device (28) by applying a pressing force (9), wherein the base surface (7) of the boards (2) of a board plane (5) is pressed onto the top surface (6) of the boards (2) of a board plane (5) below,
wherein the pressing force (9) is selected to be so great that at least individual boards (2) in a board plane (5) are plastically deformed in order to achieve a largely gap-free bonding of the base surfaces (7) and top surfaces (6) of individual boards (2) between different board planes (5), **characterized in that** a transport module (29) is formed, at which the individual boards (2) are stacked, wherein the transport module (29) is displaced at least between the stacking station (25) and the pressing device (28), wherein
the pressing device (28) has a fixing element (49), by means of which the transport module (29) is coupled to the pressing device (28), wherein the fixing element (49) is formed, in particular, by levers (50), which have a hook (51) and are positively locked, by pivoting, with a shaped piece (53) arranged on the transport module (29).

2. The method according to claim 1, **characterized in that** the pressing force (9) per cm² is greater than the compressive strength of the wood to be processed.

3. The method according to claim 1 or 2, **characterized in that** the pressing force (9) based on the total pressing surface (10) amounts to between 120N/cm² and 10,000N/cm², in particular between 150N/cm² and 7,000N/cm², preferably between 190N/cm² and 1,000N/cm².

4. The method according to one of the preceding claims, **characterized in that** the individual boards (2) are width planed before the application of adhesive (3) on their side surfaces (11), wherein the top surface (6) and the base surface (7) of the individual boards (2) is not processed.

5. The method according to one of the preceding claims, **characterized in that** the glued laminated timber (4) is thickness planed after pressing at the base surface (21) and the top surface (22) of the glued laminated timber (4), and that the side surfaces (20) of the glued laminated timber (4) are width planed.

6. The method according to one of the preceding claims, **characterized in that** the boards (2) are cut to length and sorted such that the ends (15) between the individual boards (2) in a board plane (5) are arranged so as to be offset relative to ends (15) between individual boards (2) in a subsequent board plane (5).

7. The method according to one of the preceding claims, **characterized in that** no adhesive (3) is applied to boards (2) of individual intermediate board planes (5), so that multiple glued laminated timbers (4), which can be removed from one another, are produced in the stack (1).

8. The method according to one of the preceding claims, **characterized in that** the individual boards (2) abutting one another on their front sides are provided with tapered finger joints prior to the application of adhesive (3).

9. The method according to one of the preceding claims, **characterized in that** after being pressed, the glued laminated timber (4) is cut into slices, which are glued together to form a panel and are built into a three-ply panel as the middle ply.

10. A production plant (24) for producing glued laminated timber (4), in particular for carrying out a method according to one of the preceding claims, the production plant (24) comprising:
a stacking station (25) for stacking individual boards (2) fed to the production plant (24);
a feed device (26) for manipulating and feeding the individual boards (2) to the stacking station (25);
a gluing station (27) for applying an adhesive (3), in particular wood glue, to the individual boards (2);
a pressing device (28) for pressing the individual boards (2) stacked into a stack (1),
wherein the pressing device (28) comprises multiple pressing stamps (8), by means of which a pressing force (9) acting essentially normal to the individual board planes (5) can be applied,
wherein the pressing device (28) is designed such that the pressing force (9) can be selected to be so great that at least individual boards (2) in a board plane (5) are plastically deformed in order to achieve a largely gap-free bonding of the base surfaces (7) and top surfaces (6) of individual boards (2) between different board planes (5), wherein a transport module (29) is formed, at which the individual boards (2) can be stacked, wherein the transport module (29) is displaceable at least between the stacking station (25) and the pressing device (28),
**characterized in that**
the pressing device (28) comprises a fixing element (49), by means of which the transport module (29) can be coupled to the pressing device (28), wherein the fixing element (49) is formed, in particular by levers (50), which have a hook (51) and can be positively locked, by pivoting, with a shaped piece (53) arranged on the transport module (29).

11. The production plant according to claim 10, **characterized in that** the transport module (29) has a stop surface (44) inclined at an angle (42) to the vertical line (43) and has a receiving profile (38), which is arranged so as to be displaceable on the transport module (29), wherein a receiving surface (39) of the receiving profile (38) is arranged at a right angle to the stop surface (44).

12. The production plant according to one of claims 10 or 11, **characterized in that** the pressing device (28) comprises another pressing stamp (12) in addition to the pressing stamps (8), by means of which a pressing force (9) acting normal to the individual board planes (5) can be applied, by means of which further pressing stamp (12) a further pressing force (13) acting on the side surfaces (11) can be applied, wherein the two pressing forces (9, 13) are arranged at a right angle relative to one another.

13. The production plant according to one of claims 10 to 12, **characterized in that** the pressing device (28) is dimensioned such that a pressing force (9) based on the total pressing surface (10) amounts to between 120N/cm² and 10,000N/cm², in particular between 150N/cm² and 7,000N/cm², preferably between 190N/cm² and 1,000N/cm².

## Revendications

1. Procédé de fabrication de lamellé-collé (4), dans lequel le procédé comprend les étapes suivantes :
- mise à disposition de planches individuelles (2) au moyen d'un dispositif d'alimentation (26), dans lequel les planches (2) sont découpées dans des grumes ;
- application d'une colle (3), plus particulièrement d'une colle à bois, sur les planches individuelles (2) dans une station de collage (27) ;
- dressage des planches individuelles (2) en un empilement (1) avec plusieurs niveaux de planches (5) dans une station de dressage (25), dans lequel, dans au moins un des niveaux de planches (5), sont disposées deux planches individuelles (2) qui s'appuient l'une contre l'autre au niveau de leur face frontale (14) ;
- compression des planches (2) dressées en un empilement (1) afin d'obtenir un lamellé-collé (4) au moyen d'un dispositif de pressage (28) par l'application d'une force de pressage (9), dans lequel la surface de base (7) des planches (2) d'un niveau de planches (5) est comprimée contre la surface supérieure (6) des planches (2) d'un niveau de planches (5) situé en dessous,
dans lequel la force de pressage (9) est choisie de façon à ce qu'au moins certaines des planches (2) se trouvant dans un niveau de planches (5) soient déformées plastiquement afin d'obtenir une liaison largement exempte d'interstices des surfaces de base (7) et des surfaces supérieures (6) des planches individuelles (2) entre différents niveaux de planches (5),
**caractérisé en ce qu'**un module de transport (29) est réalisé, sur lequel les planches individuelles (2) sont empilées, dans lequel le module de transport (29) est déplacé au moins entre la station de dressage (25) et le dispositif de pressage (28),
dans lequel le dispositif de pressage (28) comprend un élément de fixation (49) au moyen duquel le module de transport (29) est couplé avec le dispositif de pressage (28), dans lequel l'élément de fixation (49) est constitué plus particulièrement par des leviers (50) qui comprennent un crochet (51) et qui sont verrouillés par complémentarité de forme avec une pièce moulée (53) disposée sur le module de transport (29).

2. Procédé selon la revendication 1, **caractérisé en ce que** la force de pressage (9) par cm² est supérieure à la résistance à la pression du bois à traiter.

3. Procédé selon la revendication 1 ou 2, **caractérisé en ce que** la force de pressage (9), vue sur toute la surface de pressage (10), est entre 120 N/cm² et 10 000 N/cm², plus particulièrement entre 150 N/cm² et 7 000 N/cm², de préférence entre 190 N/cm² et 1 000 N/cm².

4. Procédé selon l'une des revendications précédentes, **caractérisé en ce que** les planches individuelles (2) sont rabotées en largeur avant l'application de la colle (3) sur leurs faces latérales (11), dans lequel la surface supérieure (6) et la surface de base (7) des planches individuelles (2) n'est pas usinée.

5. Procédé selon l'une des revendications précédentes, **caractérisé en ce que** le lamellé-collé (4) est raboté en épaisseur, après le pressage, au niveau de la surface de base (21) et de la surface supérieure (22) du lamellé-collé (4), et **en ce que** les faces latérales (20) du lamellé-collée (4) sont rabotées en largeur.

6. Procédé selon l'une des revendications précédentes, **caractérisé en ce que** les planches (2) sont découpées en longueur ou triées de façon à ce que les joints (15) entre les différentes planches (2) se trouvant dans un niveau de planche (5) soient disposés de manière décalée par rapport aux joints (15) entre les différentes planches (2) se trouvant dans un niveau de planches (5) suivant.

7. Procédé selon l'une des revendications précédentes, **caractérisé en ce que**, sur les planches (2) de différents niveaux de planches (5) intermédiaires, de la colle (3) n'est pas appliquée, de façon à ce que, dans l'empilement (1), soient réalisés des lamellés-collés (4) pouvant être détachés les uns des autres.

8. Procédé selon l'une des revendications précédentes, **caractérisé en ce que** les différentes planches (2) s'appuyant frontalement les unes contre les autres sont aboutées par des dents avant l'application de la colle (3).

9. Procédé selon l'une des revendications précédentes, **caractérisé en ce que**, après le pressage, le lamellé-collé (4) est découpé en tranches, qui sont collées ensemble afin d'obtenir une plaque et qui sont assemblées en tant que couche centrale dans une plaque à trois couches.

10. Installation de fabrication (24) pour la fabrication de lamellé-collé (4), plus particulièrement pour l'exécution d'un procédé selon l'une des revendications précédentes, cette installation de fabrication (24) comprenant :
une station de dressage (25) pour l'empilage de différentes planches (2) introduites dans l'installation de fabrication (24) ;
un dispositif d'alimentation (26) pour la manipulation et l'introduction des planches individuelles (2) dans la station de dressage (25) ;
une station de collage (27) pour l'application d'une colle (3), plus particulièrement d'une colle à bois, sur les planches individuelles (2) ;
un dispositif de pressage (28) pour le pressage des différentes planches (2) dressées afin d'obtenir un empilement (1),
dans lequel le dispositif de pressage (28) comprend plusieurs poinçons de pressage (8) au moyen desquels une force de pressage (9) agissant globalement perpendiculairement sur les différents niveaux de planches (5) peut être appliquée,
dans lequel le dispositif de pressage (28) est conçu de façon à ce que la force de pressage (9) puisse être choisie de façon à ce qu'au moins certaines planches (2) se trouvant dans un niveau de planches (5) soient déformées plastiquement afin d'obtenir une liaison largement exempte d'interstices des surfaces de base (7) et des surfaces supérieures (6) des planches individuelles (2) entre différents niveaux de planches (5), dans lequel un module de transport (29) est prévu, sur lequel les planches individuelles (2) peuvent être empilées, dans lequel le module de transport (29) peut être coulissé au moins entre la station de dressage (25) et le dispositif de pressage (28),
**caractérisée en ce que**
le dispositif de pressage (28) comprend un élément de fixation (49) au moyen duquel le module de transport (29) peut être couplé avec le dispositif de pressage (28), dans lequel l'élément de fixation (49) est constitué plus particulièrement de leviers (50) qui comprennent un crochet (51) et qui peuvent être verrouillés par complémentarité de forme par pivotement avec une pièce moulée (53) disposée sur le module de transport (29).

11. Installation de fabrication selon la revendication 10, **caractérisée en ce que** le module de transport (29) comprend une surface de butée (44) formant un angle (42) par rapport à la verticale (43), qui est disposée de manière coulissante sur le module de transport (29), dans lequel une surface de logement (39) du profilé de logement (38) est disposé perpendiculairement par rapport à la surface de butée (44).

12. Installation de fabrication selon l'une des revendications 10 ou 11, **caractérisée en ce que** le dispositif de pressage (28) comprend, en plus des poinçons de pressage (8) au moyen desquels une force de pressage (9) agissant perpendiculairement sur les différents niveaux de planches (5), comprend également des poinçons de pressage supplémentaires (12), au moyen desquels une force de pressage supplémentaire (13) agissant sur les surfaces latérales (11) peut être appliquée, dans lequel les deux forces de pressage (9, 13) sont orientées perpendiculairement entre elles.

13. Installation de fabrication selon l'une des revendications 10 à 12, **caractérisée en ce que** le dispositif de pressage (28) est dimensionné de façon à ce qu'une force de pressage (9), vue sur toute la surface de pressage (10), est entre 120 N/cm² et 10 000 N/cm², plus particulièrement entre 150 N/cm² et 7 000 N/cm², de préférence entre 190 N/cm² et 1 000 N/cm².
